(19) Europäisches Patentamt
European Patent Office
Office européen des brevets

(11) **EP 2 328 788 B1**

(12) **EUROPÄISCHE PATENTSCHRIFT**

(45) Veröffentlichungstag und Bekanntmachung des Hinweises auf die Patenterteilung:
**01.03.2017 Patentblatt 2017/09**

(21) Anmeldenummer: **09781895.9**

(22) Anmeldetag: **17.08.2009**

(51) Int Cl.:
*B60W 20/00* (2016.01)    *B60W 10/06* (2006.01)
*B60W 10/08* (2006.01)    *B60W 10/02* (2006.01)
*B60K 6/48* (2007.10)    *B60W 40/10* (2012.01)

(86) Internationale Anmeldenummer:
**PCT/EP2009/060603**

(87) Internationale Veröffentlichungsnummer:
**WO 2010/034570 (01.04.2010 Gazette 2010/13)**

(54) **VERFAHREN UND VORRICHTUNG ZUM BETRIEB EINER HYBRIDANTRIEBSVORRICHTUNG WÄHREND DES STARTENS EINER BRENNKRAFTMASCHINE**

METHOD AND DEVICE FOR OPERATING A HYBRID DRIVE DEVICE DURING THE STARTING OF AN INTERNAL COMBUSTION ENGINE

PROCÉDÉ ET DISPOSITIF POUR FAIRE FONCTIONNER UN SYSTÈME D'ENTRAÎNEMENT HYBRIDE PENDANT LE DÉMARRAGE D'UN MOTEUR À COMBUSTION INTERNE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **26.09.2008   DE 102008042395**

(43) Veröffentlichungstag der Anmeldung:
**08.06.2011   Patentblatt 2011/23**

(73) Patentinhaber: **Robert Bosch GmbH**
**70442 Stuttgart (DE)**

(72) Erfinder: **SEEL, Andreas**
**71282 Hemmingen (DE)**

(56) Entgegenhaltungen:
**WO-A-2008/043712        DE-A1- 10 260 435**
**DE-A1-102004 002 061    DE-A1-102007 010 770**

## Beschreibung

Die Erfindung betrifft ein Verfahren und eine Vorrichtung zum Betrieb einer Hybridantriebsvorrichtung mit einer Brennkraftmaschine, einem weiteren Antriebsaggregat und einer Trennkupplung, welche zum Starten der Brennkraftmaschine geschlossen wird.

Stand der Technik

Derartige Verfahren und Vorrichtungen sind bereits aus dem Stand der Technik bekannt. Hybridfahrzeuge, mit einem Parallelhybridantrieb, weisen meist einen Verbrennungsmotor, wenigstens ein weiteres Antriebsaggregat, insbesondere eine elektrische Maschine, sowie ein Getriebe zum Einstellen der Übersetzung zwischen Antrieb und Abtrieb im Antriebstrang auf. Befindet sich zwischen dem Verbrennungsmotor und dem weiteren Antriebsaggregat eine Trennkupplung, so kann das Fahrzeug sowohl zusammen von dem Verbrennungsmotor und dem weiteren Aggregat angetrieben werden, als auch nur alleine von dem weiteren Aggregat. Wird das Fahrzeug nur von dem weiteren Aggregat angetrieben, so kann mittels Schließen der Trennkupplung die Brennkraftmaschine gestartet werden. Solange die Brennkraftmaschine noch kein Antriebsdrehmoment erzeugt, wirkt sie dem Antriebsdrehmoment des weiteren Antriebaggregates entgegen. Sobald die Brennkraftmaschine gestartet ist, addiert sich das Antriebsdrehmoment der Brennkraftmaschine zu dem Antriebsdrehmoment des weiteren Antriebsaggregates. Der Start der Brennkraftmaschine ist ein dynamischer Vorgang, der einen unregelmäßigen Verlauf des Antriebsdrehmomentes der Brennkraftmaschine aufweist. Zur Gewährleistung einer komfortablen Fahrweise des Fahrzeuges, soll das Antriebsmoment des Antriebstranges durch diesen dynamischen Start nicht gestört werden. Vielmehr soll das Antriebsmoment des Antriebstranges stets dem Fahrerwunschmoment entsprechen.

Aus der WO 2008/043712 A1 ist ein Verfahren zum Betreiben einer Hybridantriebsvorrichtung bekannt. Zum Starten der Brennkraftmaschine wird eine Trennkupplung geschlossen. Es ist vorgesehen, dass der elektrischen Maschine in Abhängigkeit von der Drehzahl des Turbinenrads des Drehmomentwandlers eine derartige Drehzahl vorgegeben wird, dass an dem Hybridantrieb beim Startvorgang der Brennkraftmaschine kein Drehmomentsprung entsteht.

Aus der Offenlegungsschrift DE 10 2007 010 770 A1 ein Verfahren zum Betreiben einer Hybridantriebsvorrichtung bekannt, bei welcher die Drehzahl eines Antriebsmotors in Abhängigkeit von einem durch eine Proportionalkupplung steuerbaren Übertragungsmoment, mit dem der Antriebsmotor mit einem Verbrennungsmotor gekoppelt wird, vorgegeben wird.

Offenbarung der Erfindung

Erfindungsgemäß sind ein Verfahren mit den Merkmalen des Anspruchs 1 und eine Vorrichtung mit den Merkmalen des Anspruchs 9 zum Betrieb einer Hybridantriebsvorrichtung für ein Kraftfahrzeug vorgesehen, welches mindestens eine Brennkraftmaschine, ein weiteres Antriebsaggregat, insbesondere eine elektrische Maschine, ein Antriebstrangmodell und eine Trennkupplung aufweist, welche zum Starten der Brennkraftmaschine geschlossen wird. Während des Startens der Brennkraftmaschine wird dabei eine Solldrehzahl für das weitere Antriebsaggregat derart vorgegeben, dass eine Veränderung des Antriebmomentes nur in Abhängigkeit eines Fahrerwunschmomentes erfolgt, wobei die Solldrehzahl für das weitere Antriebsaggregat mittels eines Antriebstrangmodells bestimmt wird. Die Solldrehzahl wird somit nicht in Abhängigkeit der aktuellen Drehzahl des weiteren Antriebsaggregates bestimmt, sondern mittels eines Antriebstrangmodells bestimmt. Technischer Hintergrund für das erfindungsgemäße Verfahren und der Vorrichtung ist, dass die Solldrehzahl für das weitere Antriebsaggregat mittels eines Antriebstrangmodells bestimmt wird, welches von den Störungen des dynamischen Starts der Brennkraftmaschine nicht beeinflusst wird. Anhand dieses Antriebstrangmodells wird die Solldrehzahl für das weitere

Antriebsaggregat bestimmt, die das weitere Antriebsaggregat ohne den Start der Brennkraftmaschine aufweisen würde. Die so ermittelte Solldrehzahl für das weitere Antriebsaggregat wird dem Drehzahlregler als Sollwert vorgegeben. Wesentlich ist dabei, dass keine rückgemeldeten Fahrzeug-/Antriebstranggrößen in die Bildung der Solldrehzahl für das weitere Antriebsaggregat eingehen, da die rückgemeldeten Größen eine Störung durch den Startablauf enthalten können. Es wird folglich kein Brennkraftmaschinen- oder Kupplungsmoment berücksichtigt, sondern nur ausgehend vom aktuellen Fahrerwunschmoment anhand eines Trägheitsmodells eine Modelldrehzahl berechnet. Damit wird nicht, wie üblich, bei der Regelung der Drehzahl des weiteren Antriebsaggregates die Solldrehzahl für das weitere Antriebsaggregat mit der Istdrehzahl verglichen, sondern die Solldrehzahl für das weitere Antriebsaggregat mit der modellierten Solldrehzahl für den Start der Brennkraftmaschine verglichen. Vorteilhaft verhält sich somit der Drehzahlverlauf während des Starts der Brennkraftmaschine genauso, als ob gar kein Start der Brennkraftmaschine stattgefunden hätte. Der Fahrer spürt somit keinen Unterschied im Fahrverhalten, noch führen unerwartete Drehmomentsprünge zu Beschleunigungen des Fahrzeugs.

In einer Weiterbildung der Erfindung erhält das Antriebstrangmodell das Fahrerwunschmoment als Eingangsgröße und gibt die Solldrehzahl für das weitere Antriebsaggregat als Ausgangsgröße aus. Das Antriebstrangmodell umfasst dabei wenigstens ein Wandlermodell. Technischer Hintergrund dieser Ausgestaltung ist, dass der Fahrer, beispielsweise mittels eines Gaspedals, ein sogenanntes Fahrerwunschmoment an das Hybridfahrzeug vorgibt. Das Fahrerwunschmoment ist somit der Drehmomentwert, den der Fahrer aktuell zur Beschleunigung des Fahrzeugs vorgibt. Dem, insbesondere mathematischen, Antriebstrangmodell wird dieses Fahrerwunschmoment als Eingangsgröße zugeführt. Das Antriebstrangmodell umfasst wenigstens ein Wandlermodell, welches wenigstens ein Pumpenrad und ein Turbinenrad modelliert. Ausgangsgröße dieses Antriebstrangmodells ist die Solldrehzahl für das weitere Antriebsaggregat. Mittels eines Wandlermodells wird das Pumpenmoment und Turbinenmoment bei der aktuell modellierten Pumpenraddrehzahl und Turbinenraddrehzahl bestimmt. Die Pumpenraddrehzahl und die Turbinenraddrehzahl werden in Abhängigkeit des aktuellen Fahrerwunschmoments, den Trägheiten und der Wandlerübertragungsfunktion bestimmt. Die Wandlerübertragungsfunktion liegt insbesondere als Kennlinie, Kennfeld oder aktuell ermittelt vor. Zu Beginn des Starts der Brennkraftmaschine wird das Antriebstrangmodell mit den aktuellen Ist-Werten, also der Pumpenraddrehzahl, der Turbinenraddrehzahl und den ermittelten Größen aus dem Fahrzeugmodell, welches insbesondere durch die Fahrwiderstandsgleichung modelliert wird, initialisiert, damit ein sprungfreier Übergang auf das Antriebstrangmodell stattfindet. Aus dem Pumpenmoment und dem Turbinenmoment ergibt sich wiederum die resultierende E-Maschinendrehzahl. Die modellierte Turbinenraddrehzahl ergibt sich aus dem modellierten Turbinenmoment und dem Fahrzeugmodell. Vorteilhafterweise wird somit das Fahrerwunschmoment als Eingangsgröße verwendet, welches nicht durch das Starten der Brennkraftmaschine beeinflusst wird. Da auch das Antriebstrangmodell nicht durch das Starten der Brennkraftmaschine beeinflusst wird, wird eine Solldrehzahl für das weitere Antriebsaggregat gebildet, deren Verlauf den Start der Brennkraftmaschine nicht berücksichtigt. Somit gehen störende Einflüsse, die durch das Starten der Brennkraftmaschine verursacht werden, nicht in die Bestimmung der Solldrehzahl für das weitere Antriebsaggregat ein.

Eine weitere Weiterbildung der Erfindung sieht vor, dass das Wandlermodell mechanische Eigenschaften, insbesondere Drehträgheiten, eines Pumpenrades, eines Turbinenrades und/oder einer Wandlerüberbrückungskupplung oder auch das Zusammenwirken untereinander, insbesondere das übertragene Moment vom Pumpenrad auf das Turbinenrad, berücksichtigt. Weitere Parameter, deren Berücksichtigung zu einer noch genaueren Modellierung führen, sind beispielsweise Reibung und Strömungsverluste der einzelnen Komponenten sowie auch dynamische Effekte, wie z.B. der Aufbau der Ölströmung beim Andrehen der Komponenten. Technischer Hintergrund dieser Ausgestaltung ist, dass das Wandlermodell die mechanischen Eigenschaften des Pumpenrades des Turbinenrades und/oder einer Wandlerüberbrückungskupplung berücksichtigt. Als mechanische Eigenschaften sind dabei insbesondere die Trägheiten der einzelnen Komponenten zu berücksichtigen. Die Wandlerüberbrückungskupplung überträgt parallel zum hydraulischen Pfad ein Moment über Reibbeläge. Ausgehend von der Momentensumme ergibt sich die Solldrehzahl nach der Formel:

$$\sum M = J \cdot \dot{\omega} \Leftrightarrow n = \frac{60}{J \cdot 2\pi} \int \sum M$$ , wobei $\dot{\omega}$ die Winkelbeschleunigung und $J$ die Drehträgheit ist. In Zusammenhang mit der Eingangsgröße, dem Fahrerwunschmoment, lässt sich so die Solldrehzahl für das weitere Antriebsaggregat ermitteln. Vorteilhaft lässt sich somit physikalisch basiert die Solldrehzahl für das weitere Antriebsaggregat ermitteln.

In einer weiteren Weiterbildung der Erfindung ist vorgesehen, dass das Antriebstrangmodell ein Zweimassenmodell mit einem zwischengeschalteten Wandlermodell umfasst. Insbesondere kann dabei auf eine Modellierung der Triebstrangelastizität verzichtet werden, da diese nur minimalen Einfluss auf die Solldrehzahl haben. Technischer Hintergrund dieser Ausgestaltung ist, dass die programmtechnisch sehr aufwändige (Rechenzeit, Speicherbedarf) Modellierung der Triebstrangelastizität, welche zu einem nichtlinearen Mehrkörper-Schwingungssystem führen würde, vermieden wird. Vorteilhaft dabei ist, dass ein möglichst einfaches Ersatzmodell verwendet wird, welches mit geringerem Aufwand zu programmieren und zu parametrieren ist. Der dadurch enstehende Fehler ist vernachlässigbar klein.

In einer weiteren Weiterbildung der Erfindung ist vorgesehen, dass eine Turbinenraddrehzahl aus der Fahrgeschwindigkeit des Fahrzeugs und einer Getriebeübersetzung ermittelt wird. Technischer Hintergrund hierfür ist, dass zur Bestimmung der aktuellen Turbinenraddrehzahl die Möglichkeit besteht, diese aus der Fahrgeschwindigkeit des Fahrzeugs und der aktuellen Getriebeübersetzung zu ermitteln. Messeinrichtungen zum Ermitteln der Fahrgeschwindigkeit eines Fahrzeugs sind im Allgemeinen bekannt und heutzutage in Fahrzeugen üblich. Die aktuelle Getriebeübersetzung kann aus dem Getriebesteuergerät ermittelt werden. Mittels dieser beiden Größen lässt sich die Turbinenraddrehzahl bestimmen, welche vorteilhaft zur Berechnung der Solldrehzahl für das weitere Antriebsaggregat in dem Antriebstrangmodell verwendet wird. In diesem Fall wird zwar auf die gemessene Fahrgeschwindigkeit zurückgegriffen. Durch die hohe Masse des Fahrzeugs ist die Fahrgeschwindigkeit vom Start der Brennkraftmaschine so gut wie nicht beeinflusst. Dadurch lässt sich das Antriebstrangmodell deutlich vereinfachen. Dadurch werden weniger Ressourcen auf dem Steuergerät benötigt und die Applikation und/oder Parametrierung vereinfacht.

In einer weiteren Weiterbildung ist vorgesehen, dass die aktuelle Getriebeübersetzung als Verhältnis von Fahrzeuggeschwindigkeit zur Turbinenraddrehzahl vor dem Starten der Brennkraftmaschine ermittelt wird. Technischer Hintergrund hierfür ist, dass vor dem Starten der Brennkraftmaschine die aktuelle Getriebeübersetzung als Verhältnis von Fahrzeuggeschwindigkeit zur Turbinenraddrehzahl bestimmt werden kann. Vor dem Starten der Brennkraftmaschine ist die Turbinenraddrehzahl nicht durch die Störungen, welche beim Starten der Brennkraftmaschine entstehen, überlagert. Dadurch kann vor dem Starten der Brennkraftmaschine die Getriebeübersetzung vorteilhaft bestimmt werden.

In einer weiteren Weiterbildung der Erfindung ist vorgesehen, dass das Antriebstrangmodell einen Fahrwiderstand berücksichtigt. Somit setzt sich das Antriebstrangmodell wenigstens aus einem Wandlermodell und einem Fahrzeugmodell zusammen. Dieser Fahrwiderstand lässt sich beispielsweise einerseits aus dem Verhältnis des aktuellen Drehmoments des weiteren Antriebsaggregats und der aktuellen Beschleunigung des Fahrzeugs vor dem Starten der Brennkraftmaschine ermitteln. Andererseits kann er aus der Fahrwiderstandsgleichung bestimmt werden.

$$M_m \cdot \frac{i_{ges}}{r} \cdot \eta_{ges} = m \cdot g \cdot f \cdot \cos\alpha + m \cdot g \cdot \sin\alpha + e \cdot m \cdot a + c_w \cdot A \cdot \frac{\rho}{2} \cdot v^2$$

Die Fahrwiderstandsgleichung besteht dabei aus folgenden Termen: Linke Seite der Gleichung: der aktuelle Fahrwiderstand als treibende Kraft in der Reifenaufstandsfläche; rechte Seite der Gleichung: Summe aus Rollwiderstand, Steigungswiderstand, Beschleunigungswiderstand und Luftwiderstand (Quelle: Kraftfahrtechnisches Taschenbuch S. 376, 25. Auflage 2003, Vieweg Verlag).

Insbesondere wird dieser Fahrwiderstand während des Startens der Brennkraftmaschine als konstanter Wert berücksichtigt. Technischer Hintergrund ist, dass somit ein aktueller Fahrwiderstand bestimmt wird. Dieser wird insbesondere als konstanter Wert während des Startens der Brennkraftmaschine angesehen, da sich der Fahrwiderstand während der kurzen Zeitdauer des Startens der Brennkraftmaschine nicht wesentlich ändert. Vorteilhaft wird so der Fahrwiderstand in dem physikalisch basierten Antriebsstrangmodell berücksichtigt.

In einer weiteren Weiterbildung der Erfindung ist vorgesehen, dass das Antriebstrangmodell das Fahrerwunschmoment als Eingangsgröße erhält und die Solldrehzahl für das weitere Antriebsaggregat als Ausgangsgröße ausgibt und wenigstens ein Modell eines Anfahrelementes umfasst. Technischer Hintergrund hierfür ist, dass die Antriebstränge von Parallelhybridfahrzeugen unterschiedliche Anfahrelemente aufweisen. Je nach Getriebeart, ob Handschaltung-, Automatik-, Doppelkupplungs- oder kontinuierlich verstellbares Getriebe werden unterschiedliche Anfahrelemente wie z.B. manuell oder automatisch betätigte Reibkupplungen, Drehmomentwandler oder Schubgliederbänder, verwendet. Vorteilhaft wird das entsprechende Anfahrelement in dem Antriebstrangmodell modelliert und berücksichtigt.

Im Folgenden soll die Erfindung anhand von zwei Figuren näher erläutert werden. Dazu zeigen die

Figur 1 eine Vorrichtung zum Betrieb einer Hybridantriebsvorrichtung.
Figur 2 ein Verfahren zum Betrieb einer Hybridantriebsvorrichtung.

Ausführungsformen der Erfindung

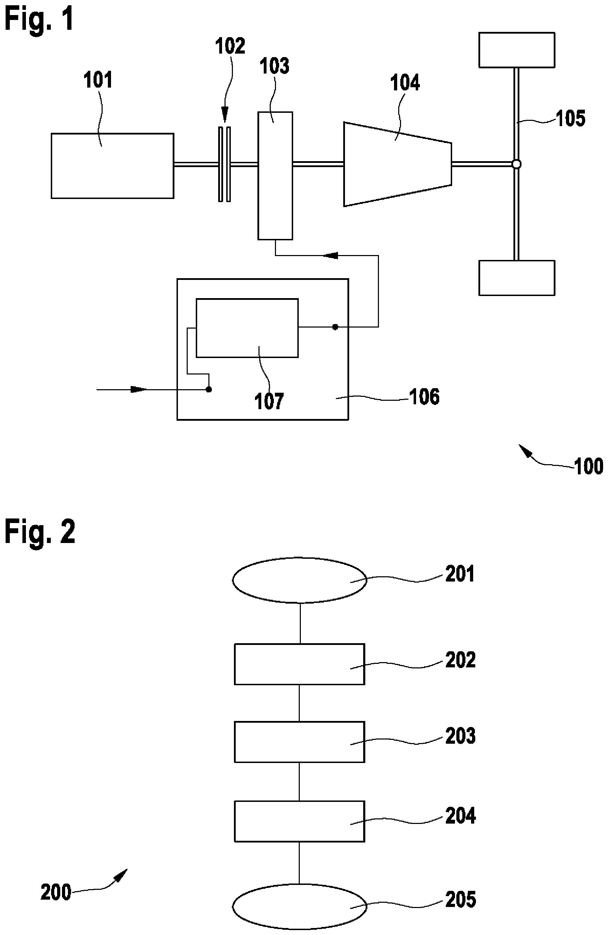

Die Figur 1 zeigt in einer schematischen Darstellung ein Ausführungsbeispiel einer vorteilhaften Hybridantriebsvorrichtung. Die Hybridantriebsvorrichtung 100 weist eine Brennkraftmaschine 101, eine Trennkupplung 102, eine elektrische Maschine 103, sowie ein Getriebe 104 und die Antriebsachse 105 mit den Antriebsrädern auf. Mittels der Trennkupplung 102 kann die Brennkraftmaschine 101 vom Antriebstrang abgekoppelt werden. Weiter weist die Vorrichtung ein Steuergerät 106 auf welches ein Antriebstrangmodell 107 umfasst. Als Eingangsgröße für das Antriebstrangmodell wird dem Steuergerät und dem Antriebstrangmodell das Fahrerwunschmoment zugeführt. Als Ausgangsgröße des Antriebstrangmodells wird die Solldrehzahl für das weitere Antriebsaggregat an die elektrische Maschine 103 ausgegeben, wenn die Brennkraftmaschine 101 durch Schließen der Trennkupplung 102 gestartet wird.

Figur 2 zeigt ein Verfahren zum Betrieb einer Hybridantriebsvorrichtung 200. Mit Schritt 201 startet das Verfahren. Das Fahrerwunschmoment, welches vom Fahrer vorgegeben wird, wird in Schritt 202 eingelesen. Mittels des Antriebstrangmodells wird in Schritt 203 die Solldrehzahl für das weitere Antriebsaggregat in Abhängigkeit des Fahrerwunschmomentes bestimmt. Die Solldrehzahl für das weitere Antriebsaggregat wird in Schritt 204 dem weiteren Antriebsaggregat vorgegeben. In Schritt 205 endet das Verfahren. Während dem Start der Brennkraftmaschine durch Schließen der Trennkupplung wird dieses Verfahren stets wiederholt.

**Patentansprüche**

1. Verfahren zum Betrieb einer Hybridantriebsvorrichtung für ein Kraftfahrzeug, aufweisend mindestens eine Brennkraftmaschine (101), ein weiteres Antriebsaggregat (103), insbesondere eine elektrische Maschine und eine Trennkupplung (102), welche zum Starten der Brennkraftmaschine (101) geschlossen wird, wobei während des Startens der Brennkraftmaschine (101) eine Solldrehzahl für das weitere Antriebsaggregat (103) derart vorgegeben wird, dass eine Veränderung des Antriebmomentes nur in Abhängigkeit eines Fahrerwunschmomentes erfolgt, **dadurch gekennzeichnet, dass** die Solldrehzahl für das weitere Antriebsaggregat (103) mittels eines Antriebsstrangmodells nur in Abhängigkeit des Fahrerwunschmoments bestimmt wird, wobei anhand des Antriebsstrangmodells die Solldrehzahl bestimmt wird, die das weitere Antriebsaggregat (103) ohne den Start der Brennkraftmaschine (101) aufweisen würde.

2. Verfahren nach Anspruch 1, **dadurch gekennzeichnet, dass** das Antriebstrangmodell (107) das Fahrerwunschmoment als Eingangsgröße erhält und die Solldrehzahl für das weitere Antriebsaggregat (103) als Ausgangsgröße ausgibt und wenigstens ein Wandlermodell umfasst.

3. Verfahren nach Anspruch 2, **dadurch gekennzeichnet, dass** das Wandlermodell mechanische Eigenschaften, insbesondere Trägheiten, eines Pumpenrades, eines Turbinenrades und/oder einer Wandlerüberbrückungskupplung berücksichtigt.

4. Verfahren nach Anspruch 1, **dadurch gekennzeichnet, dass** das Antriebstrangmodell (107) ein 2-Massen Modell mit einem zwischengeschalteten Wandlermodell umfasst.

5. Verfahren nach Anspruch 2, **dadurch gekennzeichnet, dass** eine Turbinenraddrehzahl aus der Fahrzeuggeschwindigkeit und einer Getriebeübersetzung ermittelt wird.

6. Verfahren nach Anspruch 5, **dadurch gekennzeichnet, dass** die Getriebeübersetzung als Verhältnis von Fahrzeuggeschwindigkeit zur Turbinenraddrehzahl vor dem Starten der Brennkraftmaschine (101) ermittelt wird.

7. Verfahren nach Anspruch 1, **dadurch gekennzeichnet, dass** das Antriebstrangmodell (107) einen Fahrwiderstand berücksichtigt, welcher aus dem Verhältnis des aktuellen Drehmoments des weiteren Antriebsaggregats (103) und der aktuellen Beschleunigung des Fahrzeugs vor dem Starten der Brennkraftmaschine (101) ermittelt wird und insbesondere dass der Fahrwiderstand während des Startens der Brennkraftmaschine (101) als konstanter Wert berücksichtigt wird.

8. Verfahren nach Anspruch 1, **dadurch gekennzeichnet, dass** das Antriebstrangmodell (107) das Fahrerwunschmoment als Eingangsgröße erhält und die Solldrehzahl für das weitere Antriebsaggregat (103) als Ausgangsgröße ausgibt und wenigstens ein Modell eines Anfahrelementes umfasst.

9. Vorrichtung zum Betrieb einer Hybridantriebsvorrichtung für ein Kraftfahrzeug, aufweisend mindestens eine Brennkraftmaschine (101), ein weiteres Antriebsaggregat (103), insbesondere eine elektrische Maschine und eine Trennkupplung (102), welche zum Starten der Brennkraftmaschine (101) geschlossen wird, wobei Mittel (106) vorgesehen sind, die während des Startens der Brennkraftmaschine (101) eine Solldrehzahl für das weitere Antriebsaggregat (103) derart vorgeben, dass eine Veränderung des Antriebmomentes nur in Abhängigkeit eines Fahrerwunschmomentes erfolgt, **dadurch gekennzeichnet, dass** die Mittel (106) ein Antriebsstrangmodell (107) umfassen, mit dem die Solldrehzahl für das weitere Antriebsaggregat nur in Abhängigkeit von dem Fahrerwunschmoment bestimmt wird, wobei anhand des Antriebsstrangmodells die Solldrehzahl bestimmt wird, die das weitere Antriebsaggregat (103) ohne den Start der Brennkraftmaschine (101) aufweisen würde.

## Claims

1. Method for operating a hybrid drive device for a motor vehicle, comprising at least one internal combustion engine (101), a further drive assembly (103), in particular an electric machine and a clutch (102) which is closed in order to start the internal combustion engine (101), wherein during the starting of the internal combustion engine (101) a setpoint rotational speed for the further drive assembly (103) is predefined in such a way that a change in the drive torque occurs only as a function of a driver's request torque, **characterized in that** the setpoint rotational speed for the further drive assembly (103) is determined by means of a drive train model only as a function of the driver's request torque, wherein the setpoint rotational speed which the further drive assembly (103) would have without the starting of the internal combustion engine (101) is determined on the basis of the drive train model.

2. Method according to Claim 1, **characterized in that** the drive train model (107) receives the driver's request torque as an input variable and outputs the setpoint rotational speed for the further drive assembly (103) as an output variable and comprises at least one converter model.

**3.** Method according to Claim 2, **characterized in that** the converter model takes into account mechanical properties, in particular inertia values, of a pump wheel, of a turbine wheel and/or of a converter lockup clutch.

**4.** Method according to Claim 1, **characterized in that** the drive train model (107) comprises a dual mass model with an intermediately connected converter model.

**5.** Method according to Claim 2, **characterized in that** a turbine wheel rotational speed is determined from the vehicle speed and a transmission ratio.

**6.** Method according to Claim 5, **characterized in that** the transmission ratio is determined as a ratio of the vehicle speed with respect to the turbine wheel rotational speed before the starting of the internal combustion engine (101).

**7.** Method according to Claim 1, **characterized in that** the drive train model (107) takes into account a driving resistance which is determined from the ratio of the current torque of the further drive assembly (103) and the current acceleration of the vehicle before the starting of the internal combustion engine (101), and, in particular, **in that** the driving resistance is taken into account as a constant value during the starting of the internal combustion engine (101).

**8.** Method according to Claim 1, **characterized in that** the drive train model (107) receives the driver's request torque as an input variable and outputs the setpoint rotational speed for the further drive assembly (103) as an output variable and comprises at least one model of a starter element.

**9.** Device for operating a hybrid drive device for a motor vehicle, having at least one internal combustion engine (101), a further drive assembly (103), in particular an electric machine and a clutch (102) which is closed in order to start the internal combustion engine (101), wherein means (106) are provided which predefine a setpoint rotational speed for the further drive assembly (101) during the starting of the internal combustion engine (103), such that a change in the drive torque occurs only as a function of a driver's request torque, **characterized in that** the means (106) comprise a drive train model (107) with which the setpoint rotational speed for the further drive assembly is determined only as a function of the driver's request torque, wherein the setpoint rotational speed which the further drive assembly (103) would have without the starting of the internal combustion engine (101) is determined on the basis of the drive train model.

**Revendications**

**1.** Procédé pour faire fonctionner un système d'entraînement hybride pour un véhicule à moteur, présentant au moins un moteur à combustion interne (101), un autre groupe propulseur (103), en particulier une machine électrique et un embrayage de séparation (102), qui est fermé pour le démarrage du moteur à combustion interne (101), dans lequel pendant le démarrage du moteur à combustion interne (101) une vitesse de rotation théorique pour l'autre groupe propulseur (103) est prédéterminée, de telle manière qu'une variation du couple moteur ne se produise qu'en fonction d'un couple souhaité par le conducteur, **caractérisé en ce que** la vitesse de rotation théorique pour l'autre groupe propulseur (103) n'est déterminée au moyen d'un modèle de chaîne cinématique qu'en fonction du couple souhaité par le conducteur, dans lequel on détermine à l'aide du modèle de chaîne cinématique la vitesse de rotation théorique, que l'autre groupe propulseur (103) présenterait en l'absence de démarrage du moteur à combustion interne (101).

**2.** Procédé selon la revendication 1, **caractérisé en ce que** le modèle de chaîne cinématique (107) reçoit comme grandeur d'entrée le couple souhaité par le conducteur et produit comme grandeur de sortie la vitesse de rotation théorique pour l'autre groupe propulseur (103) et comprend au moins un modèle de convertisseur.

**3.** Procédé selon la revendication 2, **caractérisé en ce que** le modèle de convertisseur tient compte de propriétés mécaniques, en particulier des inerties, d'une roue de pompe, d'une roue de turbine et/ou d'un embrayage de contournement de convertisseur.

**4.** Procédé selon la revendication 1, **caractérisé en ce que** le modèle de chaîne cinématique (107) comprend un modèle à deux masses avec un modèle de convertisseur intercalé.

**5.** Procédé selon la revendication 2, **caractérisé en ce que** l'on détermine une vitesse de rotation de turbine à partir de la vitesse du véhicule et d'un rapport de transmission d'engrenages.

**6.** Procédé selon la revendication 5, **caractérisé en ce que** le rapport de transmission d'engrenages est déterminé comme le rapport de la vitesse du véhicule à la vitesse de rotation de la turbine avant le démarrage du moteur à combustion interne (101).

**7.** Procédé selon la revendication 1, **caractérisé en ce que** le modèle de chaîne cinématique (107) tient compte d'une résistance à l'avancement, qui est déterminée à partir du rapport du couple de rotation actuel de l'autre groupe propulseur (103) et de l'accélération actuelle du véhicule avant le démarrage du moteur à combustion interne (101) et en particulier en ce que la résistance à l'avancement pendant le démarrage du moteur à combustion interne (101) est considérée comme une valeur constante.

**8.** Procédé selon la revendication 1, **caractérisé en ce que** le modèle de chaîne cinématique (107) reçoit comme grandeur d'entrée le couple souhaité par le conducteur et produit comme grandeur de sortie la vitesse de rotation théorique pour l'autre groupe propulseur (103) et comprend au moins un modèle de l'élément de démarrage.

**9.** Dispositif pour faire fonctionner un système d'entraînement hybride pour un véhicule à moteur, présentant au moins un moteur à combustion interne (101), un autre groupe propulseur (103), en particulier une machine électrique et un embrayage de séparation (102), qui est fermé pour le démarrage du moteur à combustion interne (101), dans lequel il est prévu des moyens (106), qui prédéterminent pendant le démarrage du moteur à combustion interne (101) une vitesse de rotation théorique pour l'autre groupe propulseur (103), de telle manière qu'une variation du couple moteur ne se produise qu'en fonction d'un couple souhaité par le conducteur, **caractérisé en ce que** les moyens (106) comprennent un modèle de chaîne cinématique (107), avec lequel la vitesse de rotation théorique pour l'autre groupe propulseur n'est déterminée qu'en fonction du couple souhaité par le conducteur, dans lequel on détermine à l'aide du modèle de chaîne cinématique la vitesse de rotation théorique, que l'autre groupe propulseur (103) présenterait en l'absence de démarrage du moteur à combustion interne (101).

## Fig. 1

101  102  103  104

105

107  106

100

## Fig. 2

201

202

203

204

200

205

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2008043712 A1
- DE 102007010770 A1

### In der Beschreibung aufgeführte Nicht-Patentliteratur

- Kraftfahrtechnisches Taschenbuch. Vieweg Verlag, 2003, 376